# EUROPÄISCHE PATENTANMELDUNG

(11) **EP 1 294 130 A2**
(43) Veröffentlichungstag der Anmeldung: **19.03.2003**
(21) Anmeldenummer: 02020512.6
(22) Anmeldetag: 13.09.2002
(51) Int. Cl.: H04L 12/28

(54) **Verfahren zur Unterstützung einer Handover- und Roaming-Prozedur in einem Mehrzellenfunksystem auf Basis des Bluetooth-Standards**

(30) Priorität: 17.09.2001 DE 10145753
(71) Anmelder: Tenovis GmbH & Co. KG, 60326 Frankfurt am Main (DE)
(72) Erfinder: Rommel, Joachim, D-64546 Mörfelden-Walldorf (DE); Ness, Reto, 65817 Eppstein/Taunus (DE); Kammoun, Khalil, 60325 Frankfurt (DE); Strenge, Klaus, 61169 Friedberg (DE)
(74) Vertreter: Patentanwaltskanzlei WILHELM & BECK

(57) **Zusammenfassung**

Die Erfindung betrifft ein Verfahren zur Unterstützung einer Handover- und Roaming-Prozedur zwischen einem mobilen Handgerät (HS) und über ein Netzwerk miteinander und mit einer Zentrale (MS) verbundenen stationären Zugriffspunkten (AP) eines Mehrzellenfunksystems auf Basis des Bluetooth-Standards, aufweisend die Schritte: Bewertungsfreies Messen der Sende-Feldstärke von im Empfangsbereich des Handgeräts (HS) liegenden Zugriffspunkten (AP1, AP2) auf Grundlage einer gemäß dem Bluetooth-Standard im Handgerät (HS) vorgesehenen Verbindungsqualitätsüberwachung, Bewerten der Zugriffspunkte (AP1, AP2) nach gemessener Sende-Feldstärke, und Wählen desjenigen Zugriffspunkts (AP1) zugunsten Roaming/Handover, für den das Handgerät (HS) die größte Sende-Feldstärke misst.

## Beschreibung

Mehrzellenfunksysteme auf Basis des Bluetooth-Standards bestehen aus einer Zentrale, dem sogenannten Mobility Server (abgekürzt: MS), der mit einer Reihe von Zugriffspunkten, auch als Access-Points (AP) bezeichnet, über ein LAN (Local Area Network) verbunden ist. Der Zweck der Zentrale besteht darin, einen zentralen Verbindungspunkt mit einem Local Area Network (LAN) zu schaffen, um Dienstleistungen bereitzustellen und um die Verbindung zwischen der Zentrale, den Zugriffspunkten und mobilen Handgeräten, auch als Handset (abgekürzt HS) bezeichnet, zu unterstützen, die an den entsprechenden Prozeduren teilnehmen.

Prozesse innerhalb von Bluetooth-Geräten laufen mittels HCI-Kommandos und hierdurch ausgelöste HCI-Ereignisse (auch als HCI-Event bezeichnet) ab. Diese Kommandos werden von der Host-Software eines Bluetooth-Geräts (beispielsweise ein Handgerät) an die eigene Hardware des Geräts gesendet. Im Fall des Bluetooth-Standard wird der Begriff "Host" jeweils für die höheren Bluetooth-Software-Schichten und die Anwendungssoftware verwendet. Der Begriff "Host-Controller" wird für die Bluetooth-Hardware (das Funkmodul) verwendet.

Ein Mehrzellenfunksystem auf Basis des Bluetooth-Standards sieht verschiedene Anwendungsszenarien vor. Basis ist das sogenannte "Piconet". Ein Piconet besteht aus mindestens zwei Teilnehmern, einem "Master" und einem "Slave". Bei zwei Teilnehmern spricht man von einer "Point-to-Point"-Verbindung. Gibt es mehr als zwei Teilnehmer, spricht man von "Point-to-Multipoint", wobei es lediglich einen "Master" und mehrere "Slaves" gibt. Die "Slaves" können miteinander nicht direkt kommunizieren, sondern nur über den "Master". Ein "Slave" kann in mehreren "Piconets" Teilnehmer sein. In diesem Fall spricht man von "Scatternet", da ein "Slave" permanent zwischen den "Piconets" in einem Zeitunterteilungsverfahren wechselt.

Bei dem in Rede stehenden Verfahren, auf das die Erfindung gerichtet ist, übernehmen die Zugriffspunkte die Rolle des "Masters" und die Handgeräte sind die "Slaves". Das bedeutet, das jeder Zugriffspunkt ein "Piconet" bildet.

Eine Möglichkeit, die Qualität einer Verbindung zwischen "Master" und "Slave" zu überprüfen ist die Feldstärkemessung, im Rahmen des Bluetooth-Standards auch als "RSSI" (= Receiver Signal Strength Indicator) bezeichnet. Die Feldstärkemessung kann beim Bluetooth-Standard von beiden Seiten (beispielsweise Handgerät und Zugriffspunkt) unabhängig voneinander erfolgen. Der Empfangsteil des Handgeräts misst dabei die Feldstärke, mit der die vom Zugriffspunkt gesendeten Signale empfangen werden. Umgekehrt kann der Empfangsteil des Zugriffspunkts die vom Handgerät gesendeten Signale messen. Die Feldstärkemessung erfolgt über das HCI-Kommando "Read_RSSI". Für die Feldstärkemessung ist eine aktive Verbindung, ein sogenannter ACL-Link (ACL steht für Asynchronous Connectionless Link) Voraussetzung. Bei einem Funksystem, wie bei dem Mehrzellenfunksystem auf Basis des Bluetooth-Standards ist eine permanente aktive Verbindung jedoch nicht erwünscht, weil dies mit einem entsprechend hohen Stromverbrauch für das Handgerät verbunden ist.

Um die angesprochene permanente aktive Verbindung zu vermeiden sieht der Bluetooth-Standard einen sogenannten Parkmodus, auch als "Parkmode" bezeichnet vor. Eine aktive Verbindung kann demnach geparkt werden, wenn sie nicht dauerhaft benötigt wird, beispielsweise nach einem Gesprächsende. Der Master dieser geparkten Verbindung sendet in bekannten Zeitabständen einen sogenannten "Beacon" an sämtliche geparkten Slaves des Piconets. Anhand dieses Beacon können die Slaves sich zum Master synchronisieren. Im Beacon werden zusätzlich bestimmte Informationen übermittelt, beispielsweise dann, wenn eine Verbindung erneut aktiviert werden soll, und dieser Vorgang wird auch als "Unpark" bezeichnet.

Wenn eine Bluetooth-Gerät mit anderen Geräten kommunizieren möchte, beispielsweise wenn das mobile Handgerät mit einem Zugriffspunkt kommunizieren will und nicht weiß, welche Geräte bzw. welche Zugriffspunkte sich in Reichweite befinden, führt das Gerät eine sogenannte Anfrage, auch als "Inquiry" bezeichnet, aus. Hierauf antworten sämtliche sich in Reichweite befindlichen Geräte, die das Inquiry empfangen haben. Bei der Antwort senden die Geräte eine eindeutige Kennung, die "Bluetooth Device Address" (abgekürzt: "BD_ADDR"). Diese Prozedur wird benötigt, um andere Geräte kennen zu lernen.

Wenn einem Bluetooth-Gerät die Kennung (BD_ADDR) der Gegenstelle bekannt ist, vermag es eine Verbindung aufzubauen. Dieser Verbindungsaufbau wird auch als "Page" bezeichnet. Jedes Bluetooth-Gerät besitzt seine eigene Zeitbasis, auch als Native Clock oder abgekürzt CLKN bezeichnet. In einer Page-Prozedur kann ein Verbindungsaufbau beschleunigt werden, wenn die Zeitbasis des anderen Geräts bekannt ist.

Bestimmte Bluetooth-Geräte unterstützen eine Sendeleistungsregelung, auch als Power-Control bezeichnet. Besteht beispielsweise eine Verbindung zwischen einem Gerät A und einem Gerät B, so kontrollieren beide Geräte die Empfangsfeldstärke und die Signale der Gegenstelle. Dies geschieht automatisch in der Hardware des jeweiligen Geräts. Stellt beispielsweise die Hardware des Geräts A fest, dass die Empfangsfeldstärke im Rahmen der Verbindungsqualitätsüberwachung unter einen bestimmten Wert (auch als Golden Range bezeichnet) fällt, so fordert das Gerät A das Gerät B auf, die Sendeleistung zu erhöhen. Ist hingegen die Empfangsfeldstärke zu hoch, so wird das Gerät B aufgefordert, seine Sendeleistung zu reduzieren.

Der Bluetooth-Standard sieht in seiner aktuellen Version 1.1 die Möglichkeit für Roaming und Handover nicht vor. Unter "Roaming" versteht man die räumliche Bewegung eines mobilen Endgeräts aus einer Funkzelle in eine andere, ohne dass währenddessen eine aktive Verbindung (eine Sprach- oder Datenverbindung) besteht. Unter "Handover" versteht man einen Wechsel der Funkzelle während einer aktiven Verbindung. Roaming bzw. Handover finden immer dann statt, wenn die Verbindung zu dem aktuellen Zugriffszeitpunkt entweder schlecht ist oder wenn die Verbindung zu einem anderen Zugriffspunkt eine bessere Qualität aufweist.

Eine Aufgabe der Erfindung besteht darin, den Bluetooth-Standard um Funktionalitäten zu erweitern, um Handover und Roaming zu erleichtern.

Gelöst wird diese Aufgabe durch die Merkmale des Anspruchs 1. Vorteilhafte Weiterbildungen der Erfindung sind in den Unteransprüchen angegeben.

Demnach sieht die Erfindung bei einem Verfahren zur Unterstützung einer Handover- und Roaming-Prozedur zwischen einem mobilen Handgerät und über ein Netzwerk miteinander und mit einer Zentrale verbundenen stationären Zugriffspunkten eines Mehrzellenfunksystems auf Basis des Bluetooth-Standards vor, die Sendefeldstärke von im Empfangsbereich des Handgeräts liegenden Zugriffspunkten auf Grundlage der gemäß dem Bluetooth-Standard im Handgerät vorgesehenen Verbindungsqualitätsüberwachung bewertungsfrei zu messen, die Zugriffspunkte nach gemessener Sendefeldstärke zu bewerten und denjenigen Zugriffspunkt zugunsten Roaming und Handover zu wählen, für den das Handgerät die größte Sendefeldstärke misst.

Mit anderen Worten sieht das erfindungsgemäße Verfahren mehrere Möglichkeiten des Messens der Sende-Feldstärke von im Empfangsbereich des Handgeräts (HS) liegenden Zugriffspunkten (AP1, AP2) zur Verbindungsqualitätsüberwachung, sowie der Übertragung von Zusatzinformationen zur Unterstützung eines schnellen Wechsels des Zugriffspunktes (AP) vor.

Die erfindungsgemäß vorgesehenen Verfahrensschritte werden bevorzugt in Übereinstimmung mit dem Bluetooth-Standard mittels HCI-Kommandos mit dem zugehörigen HCI-Ereignis implementiert, wodurch Handover und Roaming in einfacher Weise in Mehrzellenfunksystemen auf Basis des Bluetooth-Standards möglich sind.

Während bei der Verbindungsqualitätsüberwachung gemäß dem Bluetooth-Standard lediglich ermittelt wird, ob er sich in einem optimalen Verbindungsqualitätsbereich befindet, nämlich innerhalb des sogenannten "Golden-Receive-Power-Range", wobei gegebenenfalls die Abweichung von diesem optimalen Bereich angegeben wird, sieht die Erfindung Messung und Berücksichtigung der Sende-Feldstärke von im Empfangsbereich des Handgeräts liegenden Zugriffspunkten in bewertungsfreier Weise, d.h. ohne Bezug auf einen optimalen Bereich vor. Mit anderen Worten liegt durch die erfindungsgemäße Erfassung der Sende-Feldstärke in bewertungsfreier Weise zu jedem Zeitpunkt eine Information darüber vor, welcher Zugriffspunkt in bezug auf ein Handgerät die beste Verbindungsqualität erbringt. In diesem Zusammenhang wird bevorzugt die Sende-Feldstärke absolut in dBm gemessen.

Ferner ist vorteilhafterweise vorgesehen, dass das Handgerät die Sende-Feldstärke des jeweiligen Zugriffspunkts im Rahmen einer Anfrage-Prozedur (Inquiry-Prozedur) ermittelt, in welcher es feststellt, welche Zugriffspunkte in seinem Empfangsbereich liegen. Mit anderen Worten führt das Handgerät erfindungsgemäß eine Inquiry-Prozedur aus, wenn es nach Zugriffspunkten sucht. Empfängt das Handgerät eine Antwort von einem Zugriffspunkt (eine sogenannte "Inquiry-Response), so liefert die Hardware des Handgeräts den Wert der entsprechenden Feldstärkemessung im zugehörigen HCI-Ereignis "RSSI Inquiry Result" an die Software (Host) des Handgeräts gleich mit. Die Software des Handgeräts ist dabei vorteilhafterweise so ausgelegt, dass bei mehreren Antworten von verschiedenen Zugriffspunkten der Zugriffspunkt mit der besten Feldstärke ermittelt wird.

Durch das erfindungsgemäße Verfahren kann das Handgerät auch im Rahmen des Park-Mode Feldstärkemessungen durchführen, ohne dass eine aktive Verbindung zu den Zugriffspunkten erforderlich ist.

Um zu verhindern, dass das Handgerät permanent das zum Ermitteln der Sende-Feldstärke von Zugriffspunkten erforderliche HCI-Kommando zu seiner Hardware senden muss, um rechtzeitig erkennen zu können, wenn die jeweilige Verbindung schlecht wird, ist vorteilhafterweise vorgesehen, dass der gewählte Zugriffspunkt erst dann durch einen anderen Zugriffspunkt ersetzt wird, für den aktuell die größte Sende-Feldstärke gemessen wird, wenn die für den gewählten Zugriffspunkt gemessene Sende-Feldstärke einen unteren Grenzwert unterschreitet. Dadurch muss beim erfindungsgemäßen Verfahren die Software des Handgeräts nicht periodisch den jeweiligen Feldstärkewert abfragen. Vielmehr meldet die Hardware des Handgeräts automatisch, wenn der Feldstärkewert einen eingestellten Wert unterschreitet (entsprechend einem HCI-Ereignis "RSSI below Lower Limit").

In Weiterbildung dieses Aspekts der Erfindung ist vorgesehen, dass der gewählte Zugriffspunkt beibehalten wird, wenn die für ihn gemessene Sende-Feldstärke während der Ersetzungsprozedur einen oberen Grenzwert überschreitet (entsprechend einem HCI-Ereignis "RSSI above Upper Limit").

Ferner ist vorteilhafterweise vorgesehen, dass der gewählte Zugriffspunkt beibehalten wird, wenn das Handgerät selbst nicht mit maximaler Sendeleistung sendet, wobei bevorzugt das Vorliegen der maximalen Sendeleistung vom Handgerät selbständig gemeldet wird. Hintergrund hierfür ist, dass dann, wenn beim Handgerät "Power-Control" unterstützt wird, es Probleme bei der Interpretation von Feldstärkewerten geben kann. Dann ist es beispielsweise möglich, dass ein Handgerät sehr dicht bei einem Zugriffspunkt liegt und dabei trotzdem nur einen mittelmäßigen Feldstärkewert misst, was daran liegt, dass der entsprechende Zugriffspunkt seine Sendeleistung standardgemäß reduziert hat und mit Hilfe des Bluetooth-Befehls "Read_Transmit_Power_Level" seine eigene Sendeleistung auslesen und damit feststellen kann, ob schon mit maximaler Sendeleistung gesendet wird. Wenn noch nicht mit maximaler Sendeleistung gesendet wird, ist der voraus gemessene Feldstärkewert noch nicht kritisch. Um zu verhindern, dass das Handgerät dabei periodisch die eigene Sendeleistung abfragt, ist vorgesehen, dass es von seiner eigenen Hardware über ein entsprechendes HCI-Ereignis benachrichtigt wird, wenn die maximale Sendeleistung erreicht ist.

Gemäß einer weiteren vorteilhaften Weiterbildung ist vorgesehen, dass vor dem Wechseln von dem gewählten Zugriffspunkt zu einem weiteren Zugriffspunkt, für den aktuell die größte Feldstärke gemessen wird, dessen Zeitbasis über das Netzwerk zum Zugriffspunkt übertragen wird, der diese Zeitbasis dann zum Handgerät übermittelt. Hintergrund hierfür ist, dass, um einen Verbindungsaufbau zu beschleunigen, es von Vorteil ist, die Native Clock (CLKN) der Gegenseite zu kennen. Wenn beispielsweise ein Handgerät mit einem Zugriffspunkt AP1 eine Verbindung hält und auf den Zugriffspunkt AP2 wechseln möchte, kann AP2 seine Native Clock an AP1 über das Netzwerk, das sämtliche Zugriffspunkte verbindet, übertragen. Der Zugriffspunkt AP1 kann dann die Differenz zwischen CLKN von AP1 und CLKN von AP2 seinerseits an das Handgerät weiterreichen, so dass dieses anschließend einen beschleunigten Verbindungsaufbau zum Zugriffspunkt AP2 durchführen kann.

Die Erfindung wird nachfolgend anhand der Zeichnung näher erläutert; in dieser zeigen:
Fig. 1 in tabellarischer Form die Struktur des HCI-Kommandos für die absolute Sende-Feldstärke-Messung und der zugehörigen Parameter,
Fig. 2 in tabellarischer Form die Struktur des HCI-Befehls für die Sende-Feldstärke-Anfrage,
Fig. 3 in tabellarischer Form die Struktur des HCI-Befehls für das Aufheben der Sende-Feldstärke-Anfrage und der zugehörigen Rückführparameter,
Fig. 4 in tabellarischer Form die Struktur des HCI-Ereignisses, demnach die Sende-Feldstärke-Anfrage vollständig ist und der zugehörigen Ereignisparameter,
Fig. 5 in tabellarischer Form die Struktur des HCI-Ereignisses betreffend das Ergebnis der Sende-Feldstärke-Anfrage und der zugehörigen Ereignisparameter,
Fig. 6 in tabellarischer Form die Struktur des HCI-Kommandos betreffend das Lesen einer Sende-Feldstärke-Messung auf dem Beacon-Kanal und der zugehörigen Parameter,
Fig. 7 in tabellarischer Form die Struktur des HCI-Kommandos betreffend das Schreiben der Sende-Feldstärke-Schwelle und der zugehörigen Parameter,
Fig. 8 in tabellarischer Form die Struktur des HCI-Ereignisses betreffend den Fall, dass die Sende-Feldstärke unterhalb der unteren Grenze zu liegen kommt und der zugehörigen Ereignisparameter,
Fig. 9 in tabellarischer Form die Struktur des HCI-Ereignisses für den Fall, dass die Sende-Feldstärke über der oberen Grenze zu liegen kommt und der zugehörigen Ereignisparameter,
Fig. 10 in tabellarischer Form die Struktur des HCI-Kommandos betreffend das Lesen der lokalen Native Clock und der zugehörigen Rückführparameter,
Fig. 11 in tabellarischer Form des HCI-Kommandos betreffend das Wählen der Power-Control sowie der zugehörigen Parameter, und
Fig. 12 in tabellarischer Form die Struktur des HCI-Ereignisses betreffend Max Power und der zugehörigen Ereignisparameter.

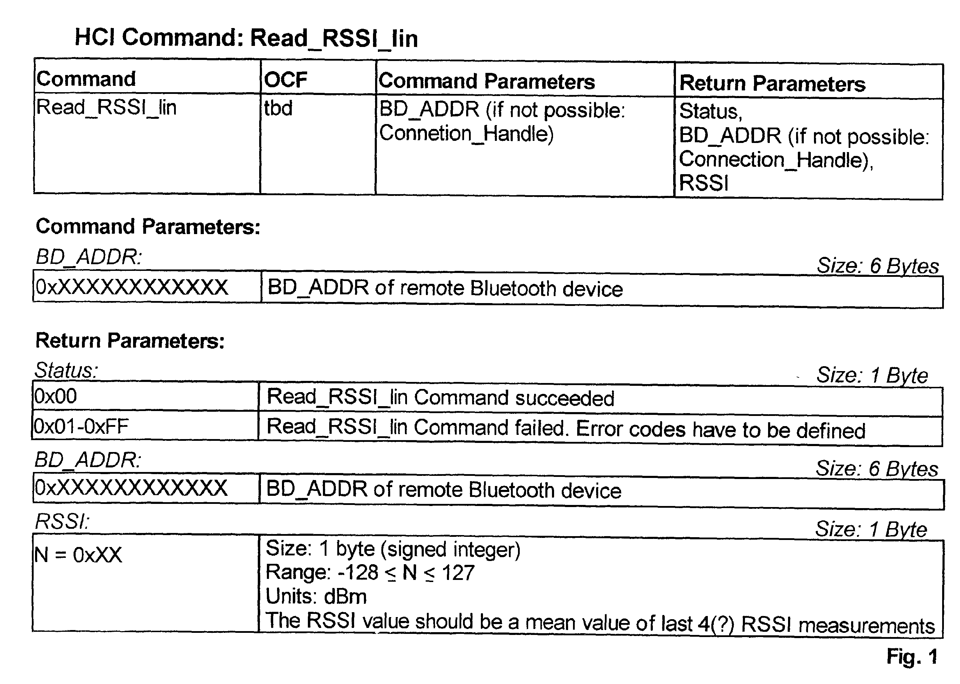

Anhand von Fig. 1 bis 9 wird die erfindungsgemäße Erweiterung von HCI-Kommandos zur Unterstützung von Roaming und Handover für ein Mehrzellenfunksystem auf Basis des Bluetooth-Standards hinsichtlich der Sendefeldstärkenmessung näher erläutert.

In Übereinstimmung mit dem Bluetooth-Standard führt der Befehl "Read_RSSI" 0 zurück, wenn die Sende-Feldstärke eines im Empfangsbereich des Handgeräts liegenden Zugriffspunkt innerhalb des sogenannten Golden Range liegt, beispielsweise in einem Bereich von -60 dBm bis -40 dBm. Ein von 0 unterschiedlicher Wert wird durch dieses Kommando ausschließlich dann rückgeführt, wenn die Distanz in dB zu der oberen Grenze des Golden Range bzw. der unteren Grenze des Golden Range vorliegt.

Im Gegensatz hierzu sieht das erfindungsgemäße Verfahren zugunsten von Roaming und Handover ein vollständig lineares Verhalten bei der Sende-Feldstärkemessung vor, demnach der durch das HCI-Kommando rückgeführte Wert stets in der Maßeinheit dBm vorliegt, so dass Maßnahmen ergriffen werden können, bevor es zu spät ist, d.h. Maßnahmen, einen anderen Zugriffspunkt für das Handgerät zu wählen.

Aus Fig. 1 geht das hierfür erfindungsgemäß genutzte HCI-Kommando hervor, nämlich Read_RSSI_lin. Dieses Kommando liest den Wert der gemessenen empfangenen Signalstärkeanzeichen RSSI (Receive Signal Strength Indicator) in dBm.

In der tabellarischen Darstellung von Fig. 1 sind außerdem die zu diesem HCI-Kommando gehörenden Kommandoparameter und Rückführparameter aufgeführt.

Wenn der Befehl Read_RSSI_lin beendet ist, wird ein Command Complete (das Kommando ist vollständig)-Ereignis erzeugt.

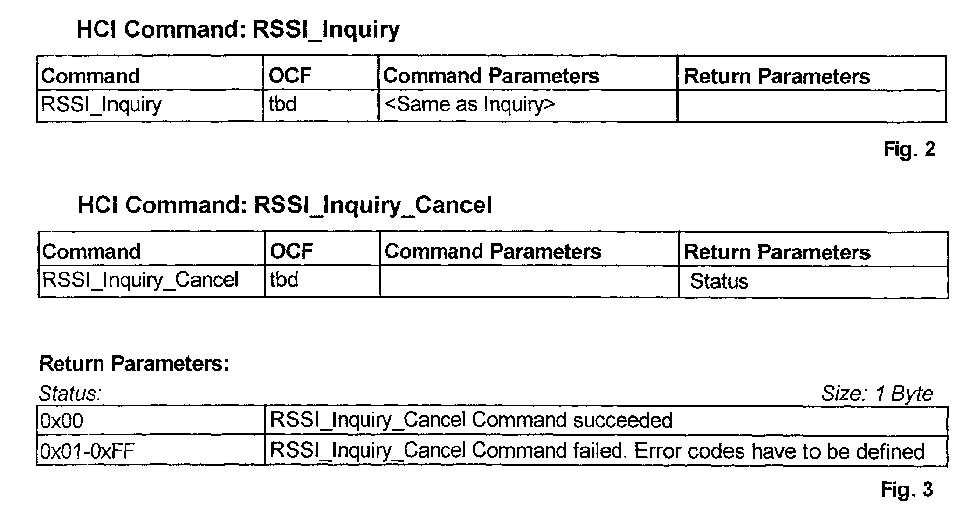

Nunmehr wird auf Fig. 2 Bezug genommen. Wenn das Handgerät seine Umgebung nach geeignetem Zugriffspunkten absucht, führt es üblicherweise eine Anfrage (Inquiry) durch. Um festzustellen, welche der Zugriffspunkte AP gute RSSI-Werte bzw. Sende-Feldstärkewerte für das Handgerät bereitstellen, war es bislang üblich, eine physikalische Verbindung zu jedem der Zugriffspunkte aufzubauen. Diese Vorgehensweise ist zeit- und energieaufwändig. Es ist deshalb erfindungsgemäß vorgesehen, dass der RSSI-Wert bereits Teil des Anfrageergebnisses (Inquiry-Result) ist.

Fig. 2 zeigt den hierzu gehörenden erfindungsgemäß genutzten HCI-Befehl RSSI_Inquiry.

Ein Command-Status-Ereignis wird von dem Host-Controller zu dem Host gesendet, wenn der Host-Controller den Anfrageprozess gestartet hat. Ein RSSI_Inquiry_Result- Ereignis wird für jedes Bluetooth-Gerät erzeugt, das auf die Anfragenachricht anspricht. Außerdem können mehrere Bluetooth-Geräte, die auf die Anfragenachricht ansprechen, in dasselbe Ereignis kombiniert werden. Ein RSSI-Inquiry-Complete-Ereignis wird erzeugt, wenn der Anfrageprozess beendet ist.

Fig. 3 zeigt den hierzu gehörenden HCI-Befehl RSSI_Inquiry_-Cancel sowie die zugehörigen Rückführparameter in tabellarischer Form.

Die zu diesem Befehl gehörigen Rückführparameter sind in Fig. 3 ebenfalls tabellarisch dargestellt.

Wenn der Befehl RSSI_Inquiry_Cancel beendet ist, wird ein Command-Complete-Ereignis erzeugt. Für den Fall, dass der Anfrageprozess aufgehoben ist, wird kein RSSI-Inquiry-Complete-Ereignis erzeugt.

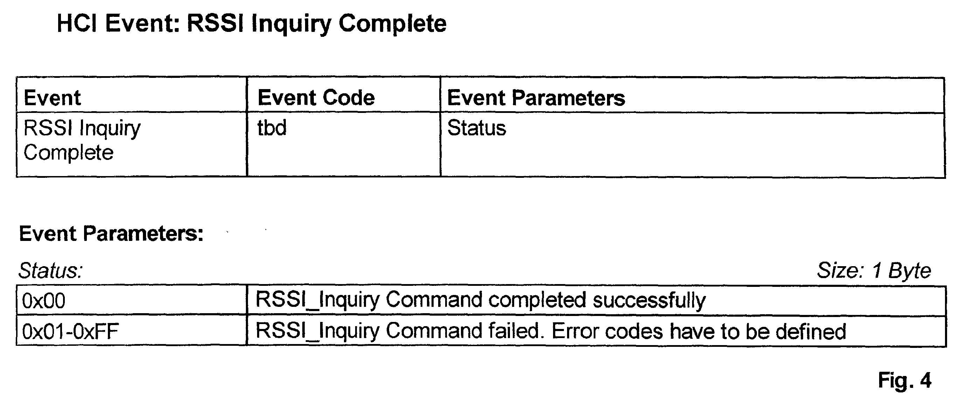

Fig. 4 zeigt das zugehörige HCI-Ereignis RSSI Inquiry Complete mit den zugehörigen Ereignis-Parametern in tabellarischer Form.

In Fig. 4 sind außerdem die zu diesem Ereignis gehörenden Ereignisparameter tabellarisch gezeigt.

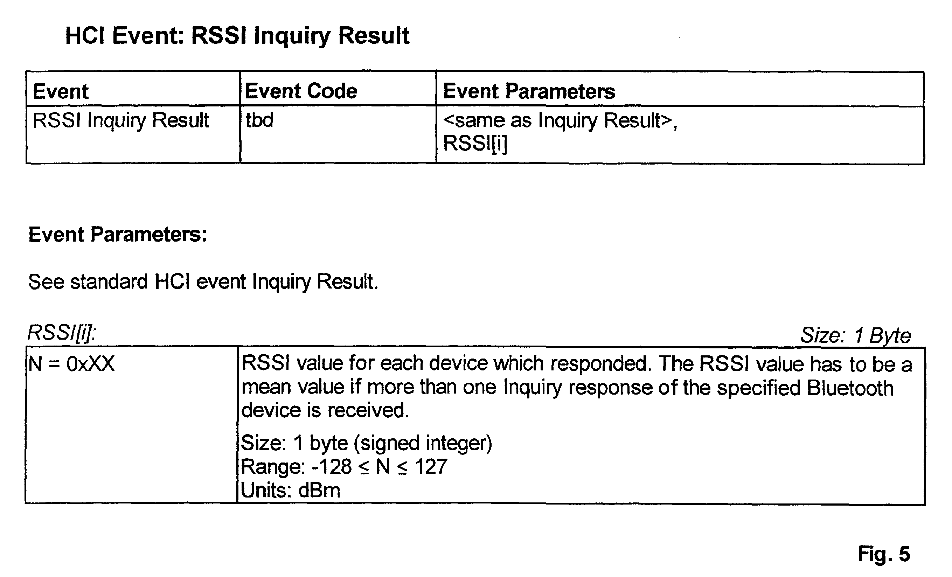

Fig. 5 zeigt das zugehörige HCI-Ereignis RSSI Inquiry Result mit den zugehörigen Ereignisparametern in tabellarischer Form. Dieses HCI-Ereignis erhält einen zusätzlichen Ereignis-Parameter RSSI für jedes Bluetooth-Gerät, das auf die letzte Anforderung erwidert hat.

In Fig. 5 sind außerdem die Ereignisparameter tabellarisch gezeigt.

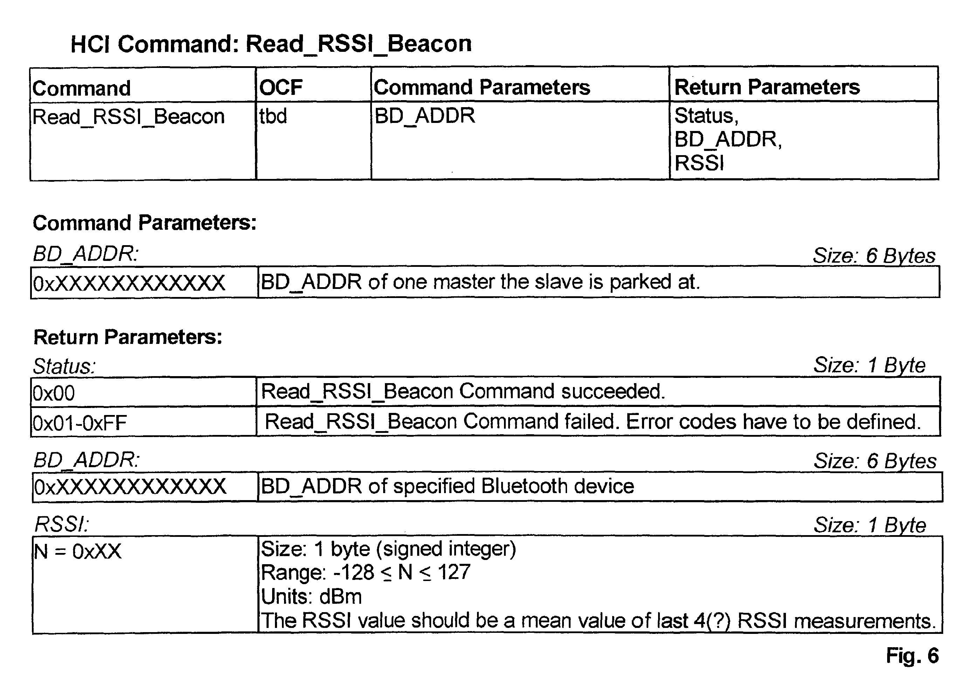

Nunmehr wird auf Fig. 6 bezug genommen. Eine Möglichkeit, ausgedehntes Paging und Inquiry zu vermeiden, besteht darin, wie einleitend angesprochen, ein Handgerät in einer Anzahl von Zugriffspunkten (n AP) zu parken. Das geparkte Handgerät hört die entsprechenden Beacon-Kanäle hinsichtlich Sendenachrichten ab, d.h. auf eine Unpark-Anforderung. Die aktuelle Version 1.1 des Bluetooth-Standards enthält keine Angaben darüber, ob der Standardbefehl Read_RSSI in diesem Fall RSSI- bzw. Sende-Feldstärkemessungen zulässt. Um die Verbindungen zu unterschiedlichen Mastern zu ermitteln, wird das Handgerät unter der Maßgabe geparkt, dass ein zyklisches Unparking und Reparking erfolgt. Die Messung des RSSI-Werts auf dem Gegenkanal als geparkter Slave wäre deshalb sehr hilfreich. Genau dies sieht die Erfindung vor. Insbesondere ist vorgesehen, dass der Kommandoparameter BD_ADDR als Parameter verwendet wird.

Fig. 6 zeigt den diesbezüglichen HCI-Befehl Read_RSSI_Beacon in tabellarischer Form zusammen mit den zugehörigen Steuerparametern und Rückführparametern. Dieser HCI-Befehl liest den Wert der gemessenen empfangenen Signalstärkeanzeige (RSSI) auf den Beacon-Kanal in dBm. Dieser Befehl ist nicht erforderlich, wenn der proprietäre Befehl Read_RSSI_lin ebenfalls zum Messen der Sende-Feldstärke auf den Beacon-Kanal im Park-Modus verwendet werden kann.

Wenn der Befehl Read_RSSI_Beacon beendet ist, wird, wie vorstehend erläutert, ein Command-Complete-Ereignis erzeugt.

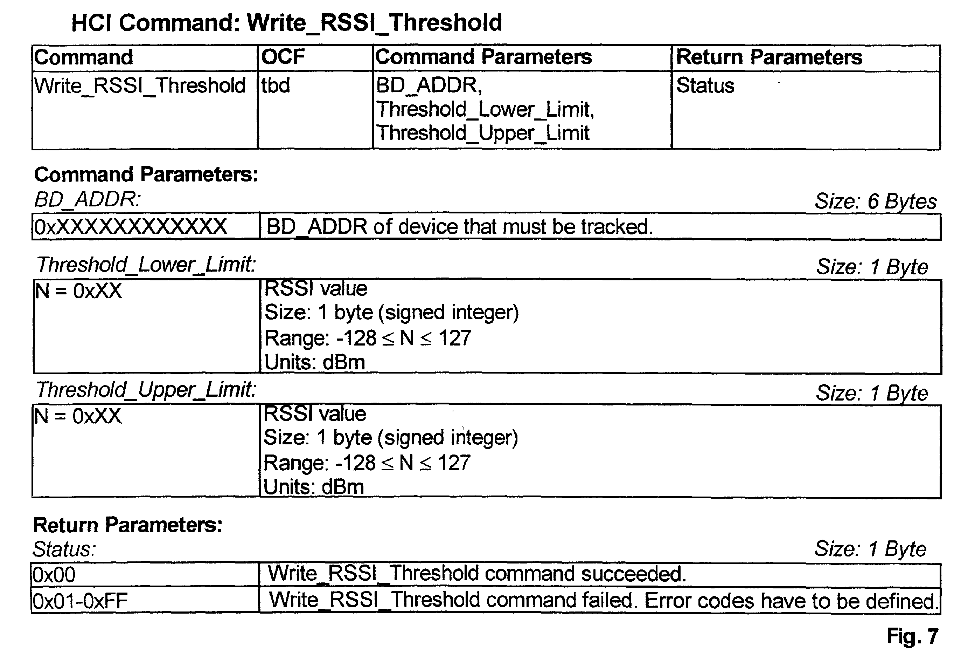

Nunmehr wird auf Fig. 7 bezug genommen. Anstatt den RSSI-Wert einer Verbindung über HCI-Befehle abzufragen, sei es im Beacon- also im passiven Modus oder in einem aktiven Modus, was zu einer gewissen Verkehrslast führen kann, d.h. zusätzlichen Datenübertragung auf der HCI-Schnittstelle ist es zweckmäßiger und dies wird erfindungsgemäß genutzt, die Verbindungsüberwachung auszuführen durch das Basisband, und falls erforderlich, ein Ereignis hinauf auf die HCI-Schnittstelle gelangen zu lassen. Beispielsweise muss die aktuelle aktive Verbindung überwacht werden, und z.B. in dem Fall, dass diese zu schlecht wird, muss eine geeignete Aktion stattfinden. Eine Möglichkeit dies zu handhaben, ist in Übereinstimmung mit der Erfindung, eine bestimmte Schwelle zu setzen und das Basisband feststellen zu lassen, ob die Sende-Feldstärke RSSI unter diese Schwelle fällt, falls dies der Fall ist, erfolgt eine Warnung "RSSI below Lower Limit".

Fig. 7 zeigt den zugehörenden HCI-Befehl Write_RSSI_Threshold zusammen mit dem zugehörigen Befehlsparametern und Rückführparametern. Dieses Kommando schreibt die Werte für Threshold_Lower_Limit- und Threshold_Upper_Limit-Parameter. Voreingestellte Werte sind - ∞ (d.h., -128 dBm) für Threshold_Lower_Limit und +∞ (d.h., +127 dBm) für Threshold_Upper_Limit.

Wenn der Befehl Write_RSSI_Threshold beendet ist, wird ein Command-Complete-Ereignis erzeugt.

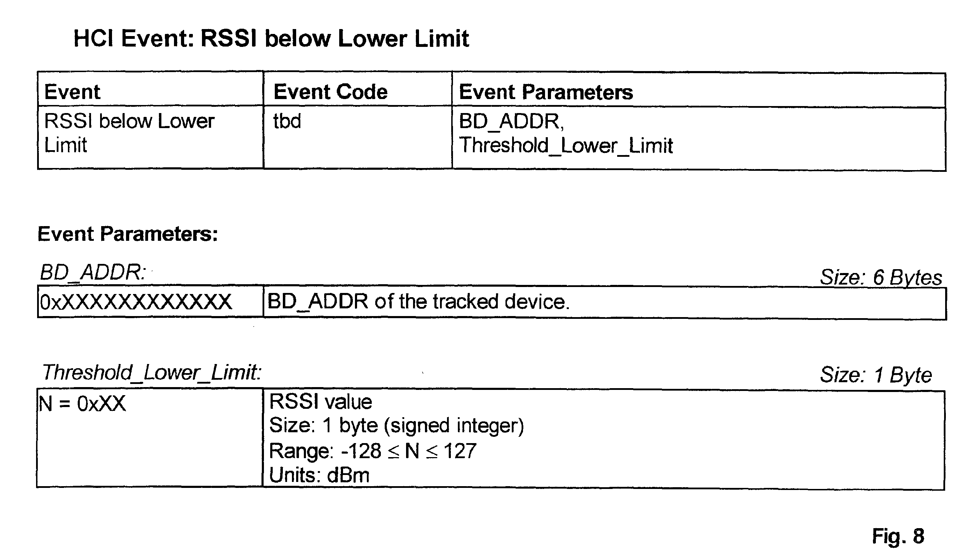

Fig. 8 zeigt das zugehörende HCI-Ereignis RSSI below Lower Limit. Dieses Ereignis zeigt an, dass RSSI bzw. die Sende-Feldstärke das erste Mal unter die untere Grenze fällt. Daraufhin tritt dieses Ereignis nicht mehr auf, bis das HCI-Ereignis RSSI above Upper Limit anzeigt, dass die Lower-Upper-Limit-Hysteres verlassen wird. Ferner sind in Fig. 8 die zugehörigen Ereignisparameter tabellarisch aufgeführt.

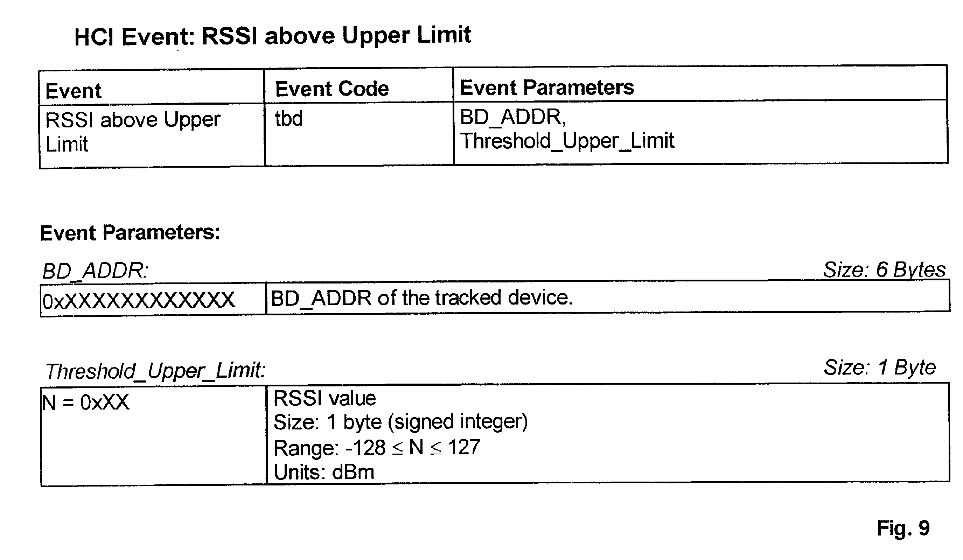

Fig. 9 zeigt das HCI-Ereignis RSSI above Upper Limit. Dieses Ereignis zeigt an, dass RSSI das erste Mal die obere Grenze überschreitet, nachdem das Ereignis RSSI below Lower Limit aufgetreten ist. Außerdem sind in Fig. 8 die zugehörigen Ereignisparameter tabellarisch aufgeführt.

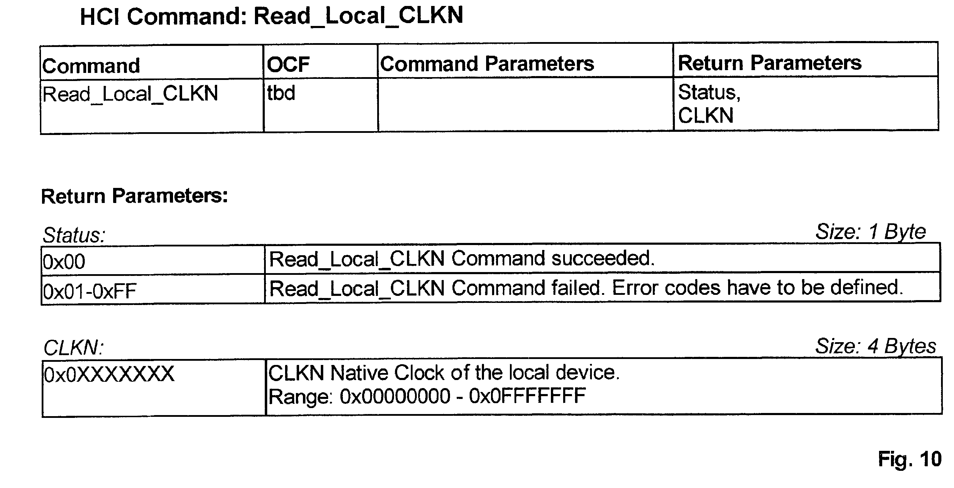

Anhand von Fig. 10 bis 12 werden nunmehr erweiterte Befehle und Ereignisse bezüglich der Ermittlung von lokalen Informationen im Rahmen der Erfindung erläutert.

Die Wahrscheinlichkeit, dass während einer Page-Prozedur eine A-Train-Übereinstimmung auftritt, kann signifikant erhöht werden, wenn eine gute Abschätzung der Taktversetzung zwischen dem pagenden und dem gepageten Gerät gemäß dem Bluetooth-Standard verfügbar ist. Diese Abschätzung muss nicht exakt ausfallen, sie sollte jedoch im Bereich von +/- 10 sek vorliegen.

Bei einem Ansatz mit mehreren Zugriffspunkten ist eine Abschätzung ausschließlich verfügbar für Geräte, die bereits verbunden worden sind. Wenn ein Handover es erforderlich macht, dass ein Handgerät HS einen neuen Zugriffspunkt AP paged oder umgekehrt ein Zugriffspunkt AP ein Handgerät HS paged, sollte eine gute Abschätzung auch dann zur Verfügung stehen, wenn diese beiden Geräte vorher noch keine Verbindung hatten, oder wenn seit diesem Ereignis eine lange Zeitdauer verstrichen ist. Die Taktversetzungsabschätzung sollte deshalb aus der Taktversetzung der aktuellen Verbindung und dem betreffenden Native Clocks dieser Zugriffspunkte AP ableitbar sein. Dies erfordert, dass die lokale Native Clock auslesbar ist.

Fig. 10 zeigt den zugehörenden HCI-Befehl Read_Local_CLKN. Dieses Kommando liest den aktuellen Local Native Clock (CLKN). Außerdem sind in Fig. 10 die zugehörigen Rückführparameter tabellarisch angeführt.

Wenn der Befehl Read_Local_CLKN beendet ist, wird ein Command_Complete-Event erzeugt.

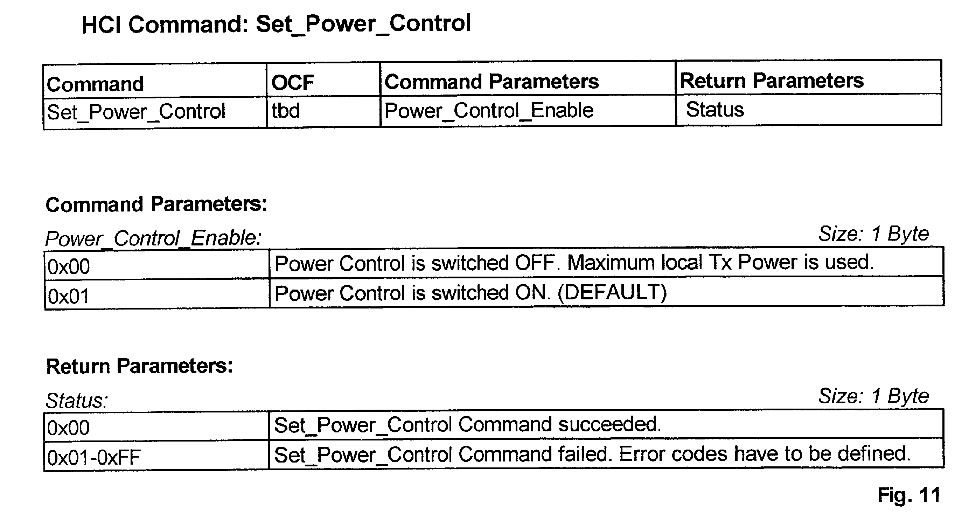

Nunmehr wird auf Fig. 11 bezug genommen. Wenn Power Control unterstützt wird, kümmert sich der Link-Manager gemäß dem Bluetooth-Standard um den Empfang sämtlicher Pakete innerhalb des "Golden Receive Power Range", indem er an das jeweils andere Bluetooth-Gerät folgende PDUs sendet: LP_incr_power-req und LMP_decr_power_req. Wenn der HCI-Befehl Read_RSSI in dem Handgerät genutzt wird, liegt keine Anzeige vor, ob das Handgerät nahe an dem jeweiligen Zugriffspunkt betrieben wird, oder fern entfernt von diesem, weil die Übertragungsstärke (Sende-Empfangsstärke) des Zugriffspunkts und des Handgeräts gemäß dem Bluetooth-Standard derart eingestellt wird, dass die empfangenen Pakete stets eine ausreichende Signalstärke aufweisen.

Das Starten einer Handover-Prozedur ist deshalb nicht sinnvoll, solange die maximale Übertragungsstärke nicht erreicht ist. Es ist deshalb eine Anzeige des aktuellen Status von Power-Control erforderlich.

Fig. 11 zeigt den zugehörenden HCI-Befehl Set_Power_Control. Dieser Befehl wird genutzt, um die Power-Control für spezielle Testeinsatzfälle zu deaktivieren. Fig. 11 zeigt außerdem die Befehlsparameter und Rückführparameter, die hierzu gehören in tabellarischer Form.

Wenn der Befehl Set_Power_Control beendet ist, wird ein Command-Complete-Ereignis erzeugt.

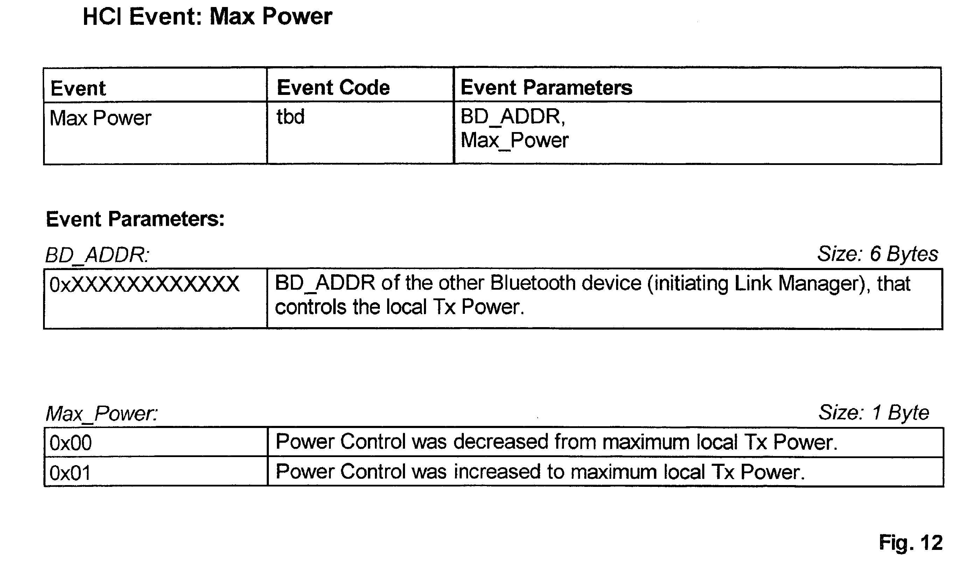

Fig. 12 zeigt das zugehörende HCI-Ereignis Max Power. Dieses Ereignis zeigt an, dass das lokale Gerät in eine maximal Sendeleistungsbetriebsart übergeht oder diese verlässt, und zwar zu einem speziellen entfernten Bluetooth-Gerät. Fig. 12 zeigt außerdem die zugehörigen Ereignis-Parameter in tabellarischer Form.

## Patentansprüche

1. Verfahren zur Unterstützung einer Handover- oder Roaming-Prozedur zwischen einem mobilen Handgerät (HS) und einem von mehreren stationären Zugriffspunkten (AP), die über ein Netzwerk miteinander und mit einer Zentrale (MS) verbunden sind und ein Mehrzellenfunksystem auf Basis des Bluetooth-Standards darstellen, aufweisend die Schritte:
Messen der Sende-Feldstärke von im Empfangsbereich des Handgeräts (HS) liegenden Zugriffspunkten (AP1, AP2) auf Grundlage einer gemäß dem Bluetooth-Standard im Handgerät (HS) vorgesehenen Verbindungsqualitätsüberwachung, Bewerten der Zugriffspunkte (AP1, AP2) nach gemessener Sende-Feldstärke, und
Wählen desjenigen Zugriffspunkts (AP1) für eine Handoveroder Roaming-Prozedur, für den das Handgerät (HS) zugunsten einer optimalen Verbindung in seiner aktuellen Position die größte Sende-Feldstärke misst.

2. Verfahren nach Anspruch 1, **dadurch gekennzeichnet, dass** das Handgerät (HS) die Sende-Feldstärke des jeweiligen Zugriffspunkts (AP) im Rahmen einer Anfrage-Prozedur ermittelt, in der das Handgerät (HS) feststellt, welche Zugriffspunkte in seinem Empfangsbereich liegen.

3. Verfahren nach Anspruch 1 oder 2, **dadurch gekennzeichnet, dass** an die Software-Ebene des Handgeräts (HS) eine automatische Benachrichtigung stattfindet, wenn die für den gewählten Zugriffspunkt (AP1) gemessene Sende-Feldstärke einen unteren Grenzwert unterschreitet.

4. Verfahren nach Anspruch 3, **dadurch gekennzeichnet, dass** an die Software-Ebene des Handgeräts (HS) eine automatische Benachrichtigung stattfindet, wenn die für den gewählten Zugriffspunkt (AP1) gemessene Sende-Feldstärke während einer Prozedur zum Umschalten auf einen Zugriffspunkt (A2) mit größerer Sende-Feldstärke einen oberen Grenzwert überschreitet und der gewählte Zugriffspunkt (AP1) beibehalten wird.

5. Verfahren nach Anspruch 3, **dadurch gekennzeichnet, dass** der gewählte Zugriffspunkt (AP1) beibehalten wird, wenn das Handgerät (HS) selbst nicht mit maximaler Sendeleistung sendet.

6. Verfahren nach Anspruch 5, **dadurch gekennzeichnet, dass** das Vorliegen der maximalen Sendeleistung von der Hardware-Ebene des Handgeräts (HS) selbständig an dessen Software-Ebene gemeldet wird.

7. Verfahren nach einem der Ansprüche 1 bis 6, **dadurch gekennzeichnet, dass** vor dem Wechseln von dem gewählten Zugriffspunkt (AP1) mit einer ersten Zeitbasis (CLKNAP1) auf einen weiteren Zugriffspunkt (AP2) mit einer zweiten Zeitbasis (CLKNAP2), für den aktuell die größte Feldstärke gemessen wird, dessen zweite Zeitbasis (CLKNAP2) über das Netzwerk zum Geräte-Zugriffspunkt (AP1) übertragen wird, dass der zweite Zugriffspunkt (AP2) die Differenz zwischen der ersten und zweiten Zeitbasis zum Handgerät (HS) übermittelt.

8. Verfahren nach einem der Ansprüche 1 bis 7, **dadurch gekennzeichnet, dass** die Schritte des Verfahrens in Übereinstimmung mit dem Bluetooth-Standard mittels HCI-Kommandos und dazugehörigen HCI-Ereignissen implementiert sind.

9. Verfahren nach einem der Ansprüche 1 bis 8, **dadurch gekennzeichnet, dass** die Sende-Feldstärke absolut in dBm gemessen wird.
